# EUROPÄISCHE PATENTSCHRIFT

(11) **EP 3 037 494 B1**
(45) Veröffentlichungstag und Bekanntmachung des Hinweises auf die Patenterteilung: **09.09.2020**
(21) Anmeldenummer: 15003296.9
(22) Anmeldetag: 19.11.2015
(51) Int. Cl.: C09J 7/38, C09J 7/21

(54) **DOPPELSEITIGES KLEBEBAND AUS PAPIER**
DOUBLE-SIDED ADHESIVE TAPE MADE FROM PAPER
BANDE COLLANTE DOUBLE-FACE EN PAPIER

(30) Priorität: 23.12.2014 DE 202014010175 U
(43) Veröffentlichungstag der Anmeldung: 29.06.2016
(73) Patentinhaber: Storch Malerwerkzeuge & Profigeräte GmbH, 42107 Wuppertal (DE)
(72) Erfinder: BRÜNNER, Lothar, 42107 Wuppertal (DE)
(74) Vertreter: Kayser, Christoph

(56) Entgegenhaltungen:
- EP-A1- 1 466 952
- EP-A1- 2 298 846
- EP-B1- 0 513 719
- DE-A1- 19 939 075
- DE-A1-102004 051 418
- DE-A1-102012 004 552
- DE-U1-202005 003 444
- OTTO WÄCHTER: "Die Hilfsmittel der modernen Papiererzeugung", DAUERHAFTIGKEIT VON PAPIER, ZEITSCHRIFT FÜR BIBLIOTHEKSWESEN UND BIBLIOGRAPHIE, SONDERHEFT 31, 1 January 1980 (1980-01-01), pages 68-81, XP055610088, Frankfurt/Main

## Beschreibung

Die vorliegende Erfindung betrifft ein doppelseitig klebendes Maskenband mit einem streifenförmigen Trägerelement mit zwei parallelen durchgehenden Längskanten und einer vorbestimmter Breite, das eine Unterseite und eine der Unterseite entgegengesetzte Oberseite aufweist, wobei auf der Unterseite eine Unterseiten-Haftschicht und auf der Oberseite eine Oberseiten-Haftschicht aufgebracht ist, wobei das Trägerelement aus einem Material hergestellt ist, das einen Anteil von größer 50 Gew.% und bis 100 Gew.% Papier aufweist und PVC-weichmacherfrei ist, wobei das Trägerelement eine Dicke von bis zu 1,0 mm hat, und sich die Oberseiten-Haftschicht über einen zusammenhängenden Teil der Breite und die Unterseiten-Haftschicht über die gesamte Breite des Trägerelements erstrecken.

Ein solches doppelseitiges klebendes Maskenband ist in Kombination aus DE 20 2005 003 444 U1 und EP 1 466 952 A1 bekannt. In diesem Stand der Technik kann das Maskenband einen Grundkörper haben, der zu über 65 Gew.% aus Papier besteht, das einseitig dehnbar ohne DEHP-Weichmacher ausgebildet sein kann und eine Dicke von bis zu 1,0 mm hat.

Aus DE 10 2004 051 418 A1 ist ein in Abschnitte gestanztes Klebeband bekannt, dass sich unter Spannung verformen können soll.

Aus EP 0 513 719 B1 ist ein Klebeband bekannt. Ein darin beschriebenes Klebeband weist einen Träger auf, der beidseitig mit einem Kleber versehen ist. Ein auf einer Unterseite des Trägers über die gesamte Breite des Trägers aufgebrachter Kleber haftet im Gebrauch auf einem abzudeckenden Untergrund. Für das Abziehen des Klebebandes vom Untergrund soll es günstig sein, wenn der Träger aus einer reißfesten PVC-Folie besteht.

Solche weichen PVC-Träger enthalten bis zu 40% Weichmacher, die bei Gebrauch zu Verfärbungen am Untergrund führen können. Weichmacher sind zudem umweltbelastend und gesundheitsgefährdend. So wurde der Weichmacher Diethylhexylphthalat (DEHP) ab dem 21. Februar 2015 für bestimmte Anwendungen zulassungspflichtig.

Die Aufgabe der vorliegenden Erfindung ist daher, ein doppelseitiges Klebeband der eingangs genannten Art derart weiterzubilden, dass dieses ohne PVC-Weichmacher seine technische Funktion erfüllt.

Die Eigenschaft "ohne PVC-Weichmacher" und der Umweltaspekt ist ein Vorteil des Einsatzes von Papier als Träger anstelle eines PVC-Bandes. Solche PVC-Bänder werden z.B. als Maskenbänder genutzt. Maskenbänder haben eine Doppelfunktion und dienen einerseits zum Abkleben von Untergründen, um bei Farb- oder Lackauftrag gerade Farbkanten bzw. Abgrenzungen von beschichteten und unbeschichteten Flächen zu erzielen, zum anderen als Trägerelement für daran haftende Abdeckmaterialien, wie Papier oder Folie, um beim Farb- oder Lackauftrag die nicht für die Beschichtung vorgesehenen Flächen gegen Verschmutzungen zu schützen. Diese PVC-Bänder (Maskenbänder) aus Kunststoff sind um 20% bis 30% dicker als die bevorzugte Ausführungsform eines Papiermaskenbandes, z.B. aus sogenanntem Reispapier. Für die Anwendung eines solchen Maskenbandes aus Papier bedeutet das, dass damit gegenüber dem Einsatz eines der üblichen Maskenbänder mit Kunststoffträger eine um 20% bis 30% reduzierte Materialschicht beim angrenzenden Farb- oder Lackkauftrag und eine deutlich bessere Qualitätsanmutung erzielt wird.

Weiter hat ein Maskenband aus Papier gegenüber den üblichen Maskenbändern mit Kunststoffträger eine erheblich reduzierte Reißdehnung (die Reißdehnung bei einem Papierträger in der bevorzugten Ausführung aus sogenannten Reispapier beträgt ca. 5% bis 15%, die Reißdehnung bei einem Kunststoff-/PVC-Träger 150% bis 250%). Die geringere Reißdehnung gewährleistet eine viel einfachere (da es nicht zu sichtbaren Verformungen des Klebebandes kommt) und gleichmäßigere Abklebung, die wiederum die Qualitätsanmutung des angrenzenden Farb- oder Lackauftrages deutlich verbessert.

Die Aufgabe wird erfindungsgemäß durch die Merkmale des Anspruchs 1 gelöst.

Ein Vorteil der vorliegenden Erfindung ist, dass das Klebeband in der bevorzugten Ausführungsform nicht nur einen einzigen kleberfreien Randstreifen aufweist. Dieser besteht darin, dass Anwendungsfehler, die beim Abkleben mit einem Maskenband mit nur einem einzigen kleberfreien Randstreifen vorkommen können, unmöglich sind, weil sich immer ein kleberfreier Randstreifen am Übergang zur zu beschichtenden Fläche befindet, egal ob z.B. von oben nach unten oder umgekehrt abgeklebt wird, und so immer gewährleistet ist, dass keine Streichwerkzeuge in das Klebemittel geraten.

Es hat sich gezeigt, dass es für das Abziehen eines Klebebandes des oben genannten Standes der Technik nicht nur günstig ist, einen Träger aus PVC-Folie zu verwenden, sondern dass es für das Abziehen des Klebebandes auch ebenso günstig ist, wenn das Klebeband aus einem Material mit wenigstens einem Papieranteil hergestellt ist. Gleichzeitig hergibt sich dadurch der Vorteil, dass der Träger seine umweltbelastende und gesundheitsgefährdende Eigenschaft verliert. PVC-Weichmacher, und insbesondere DEHP, werden nicht mehr benötigt.

Ein weiterer Vorteil ist, dass das Papier ausgewählt ist aus der Gruppe umfassend Japanpapier, Reispapier, Washi.

Ein weiterer Vorteil ist, dass sich die Unterseiten-Haftschicht über die gesamte Breite des Trägerelements erstreckt. Dadurch ist die Haftung an einem Untergrund optimal. Das Klebesitzt dann sicher und fest.

Ein weiterer Vorteil ist, dass die Unterseiten-Haftschicht eine Klebeschicht ist. Mit einem Klebemittel lässt sich anders als bei einer Adhäsion oder Klettverbindung die Haftstärke genau einstellen. Wenn nur die Unterseiten-Haftschicht als Klebeschicht ausgebildet ist, kann die Oberseiten-Haftschicht ihre Haftwirkung auch auf eine andere Weise als durch ein Klebemittel erhalten.

Ein weiterer Vorteil ist aber, dass auch die Oberseiten-Haftschicht eine Klebeschicht ist. Dadurch kann für beide Haftschichten ein und dasselbe Klebemittel verwendet werden.

Ein weiterer Vorteil ist, dass die Oberseiten-Haftschicht (im abgerollten Zustand) mit einem abziehbaren Schutzstreifen abgedeckt ist. Dadurch wird in dem Fall, dass nur die Oberseiten-Haftschicht aus einem Klebemittel besteht, dieses vor einem vorzeitigen, ungewollten Kontakt mit einer Fläche und vor Verunreinigung vor dem Einsatz geschützt.

Ein weiterer Vorteil ist, dass der Schutzstreifen aus einem Material besteht, welches wenigstens einen Anteil Papier aufweist. So führt auch der Schutzstreifen zu dem gleichen Vorteil wie das Trägerelement.

Es ist auch von Vorteil, dass das Trägerelement aufgerollt ist und der die Oberseiten-Haftschicht abdeckende Schutzstreifen so auch die Unterseiten-Haftschicht abdeckt. Dadurch verbessern sich die Lager- und Transportfähigkeit und letztlich auch die Bereitstellung des Klebebandes erheblich.

Weitere Vorteile der vorliegenden Erfindung ergeben sich aus den Merkmalen der weiteren Unteransprüche.

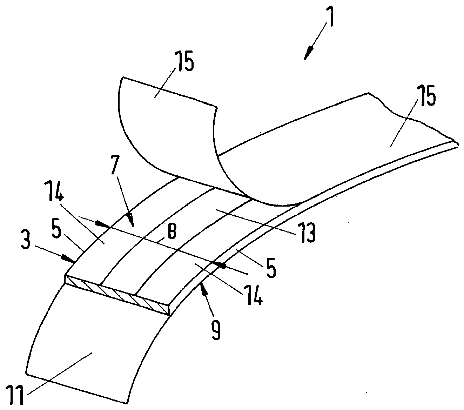

Eine Ausführungsform der vorliegenden Erfindung wird im Folgenden anhand der Zeichnung näher beschrieben. Die einzige Figur zeigt einen Abschnitt einer Länge eines Klebebandes gemäß vorliegender Erfindung.

In der Figur ist schematisch ein doppelseitiges Klebeband 1 dargestellt. Das doppelseitige Klebeband 1 weist ein Trägerelement 3 auf, das in der vorliegenden Ausführungsform ein Streifen mit zwei Längskanten 5 bildet, die in einem Abstand zueinander parallel verlaufen, welcher einer Breite B des Trägerelements 3 entspricht. Das Trägerelement 3 weist eine Oberseite 7 und eine Unterseite 9 auf und hat eine Dicke von bis zu 1,0 mm. Das Material des Trägerelements 3 ist im Wesentlichen Papier. Der Papieranteil des Materials kann je nach Anwendung variieren, beträgt aber vorzugsweise mehr als 50 Gew% und erreicht vorzugsweise 100 Gew%. Mit Papieranteil ist der Anteil Papier gemeint, der einschließlich aller für die Papierherstellung notwendigen Nebenbestandteile (z.B. Restfeuchte) als Papier bezeichnet werden kann.

In der bevorzugten Ausführungsform ist das Papier ein japanisches Reispapier. Dieses eignet sich aufgrund der Festigkeit, Oberflächenbeschaffenheit und Flexibilität besonders gut. Je nach Anwendung können sich aber auch andere Papierarten eignen, so dass die vorliegende Erfindung nicht auf ein spezielles Papier für das Trägerelement 1 beschränkt ist. Es eigenen sich Japanpapiere allgemein oder dergleichen.

Auf der Unterseite 9 ist über die gesamte Breite B eine Unterseiten-Haftschicht 11 aufgebracht. Diese Unterseiten-Haftschicht 11 ist vorzugsweise eine Klebeschicht mit einem Klebemittel, das UV-beständig ist. In anderen Ausführungsformen kann die Unterseiten-Haftschicht 11 aber auch eine andere Haftwirkung haben, als die durch ein Klebemittel. Denkbar sind Haken-/Ösenverbindungen (Klettverbindung) oder Kombinationen aus Klebemittel und solchen mechanischen Verbindungen. Auch alle Variationen der Adhäsion sollen von der Erfindung für die Unterseiten-Haftschicht 11 umfasst sein.

Zudem kann auch die Unterseiten-Haftschicht 9 in anderen Ausführungsformen nicht über die ganze Breite B der Unterseite 9 aufgebracht sein. Wenn die Anwendung es zweckdienlich erscheinen lässt, kann auch die Unterseiten-Haftschicht 9 nur einen Teil der Breite B bedecken.

Auf der Oberseite 7 ist eine Oberseiten-Haftschicht 13 aufgebracht. Diese Oberseiten-Haftschicht 13 ist vorzugsweise eine Klebeschicht mit einem Klebemittel, dass UV-beständig ist. In anderen Ausführungsformen kann die Oberseiten-Haftschicht 13 aber auch eine andere Haftwirkung haben, als die durch ein Klebemittel. Denkbar sind Haken-/Ösenverbindungen (Klettverbindung) oder Kombinationen aus Klebemittel und solchen mechanischen Verbindungen. Auch alle Variationen der Adhäsion sollen von der Erfindung für die Oberseiten-Haftschicht 13 umfasst sein.

In der vorliegenden und bevorzugten Ausführungsform ist die Oberseiten-Haftschicht 13 nur auf einem Teil der Breite B des Trägerelements 3 ausgebildet. In der Figur liegt dieser Teil mittig auf der Oberseite 7. In anderen Ausführungsformen kann der Teil aber auch einen anderen Bereich der Oberseite 7 abdecken, z.B. ausgehend von einer Längskante 5. In der dargestellten Ausführungsform ergibt sich zwischen der Oberseiten-Haftschicht 13 und den beiden Längskanten 5 jeweils ein haftmittelfreier Bereich 14, der sich streifenförmig über die ganze Länge des Trägerelements 3 erstreckt. In den anderen Ausführungsformen, in denen sich die Oberseiten-Haftschicht 13 von einer Längskante 5 aus erstreckt, ergibt sich dann nur ein haftmittelfreier Bereich 14 an der gegenüberliegenden Längskante 5, der sich dann ebenfalls über die gesamte Länge des Trägerelements 3 erstreckt.

Die Oberseiten-Haftschicht 13 bedeckt wenigstens 20% der Breite B des Trägerelements 3 auf der Oberseite 7.

Vor dem Gebrauch ist es günstig, dass die Oberseiten-Haftschicht 13 und die Unterseiten-haftschicht 11 geschützt sind. Zu diesem Zweck sind die Unterseiten-Haftschicht 11 und die Oberseiten-Haftschicht 13 zeitweise (vor ihrem Gebrauch) mit einer abziehbaren Schutzschicht 15 bedeckt.

Wenn das doppelseitige Klebeband 1 in einem aufgerollten Zustand bereitgestellt wird, befindet sich die Schutzschicht 15 zwischen den Windungen einer solchen Rolle, so dass ein und dieselbe Schutzschicht 15 die Unterseiten-Haftschicht 11 und die Oberseiten-Haftschicht 13 abdeckt und ein Abrollen des Klebebandes 1 erleichtert.

Das Material der Schutzschicht 15 ist im Wesentlichen Papier. Der Papieranteil des Materials kann je nach Anwendung variieren, beträgt aber vorzugsweise mehr als 50 Gew% und erreicht vorzugsweise 100 Gew%. Mit Papieranteil ist der Anteil Papier gemeint, der einschließlich aller für die Papierherstellung notwendigen Nebenbestandteile (z.B. Restfeuchte) als Papier bezeichnet werden kann.

### Bezugszeichenliste

- 1: Klebeband
- 3: Trägerelement
- 5: Längskanten
- 7: Oberseite
- 9: Unterseite
- 11: Unterseiten-Haftschicht
- 13: Oberseiten-Haftschicht
- 14: haftmittelfreier Bereich
- 15: Schutzschicht
- B: Breite des Klebebandes

## Patentansprüche

1. Doppelseitig klebendes Maskenband (1) mit einem streifenförmigen Trägerelement (3) mit zwei parallelen durchgehenden Längskanten (5) und einer vorbestimmter Breite (B), das eine Unterseite (9) und eine der Unterseite (9) entgegengesetzte Oberseite (7) aufweist, wobei auf der Unterseite (9) eine Unterseiten-Haftschicht (11) und auf der Oberseite (9) eine Oberseiten-Haftschicht (13) aufgebracht ist, wobei das Trägerelement (3) aus einem Material hergestellt ist, das einen Anteil von größer 50 Gew.% und bis 100 Gew.% Papier aufweist und frei von PVC-Weichmachern ist, wobei das Trägerelement (3) eine Dicke von bis zu 1,0 mm hat, wobei sich die Oberseiten-Haftschicht (13) über einen zusammenhängenden Teil der Breite (B) und die Unterseiten-Haftschicht (11) über die gesamte Breite (B) des Trägerelements (3) erstrecken.
**dadurch gekennzeichnet,**
**dass** der Teil der Breite (B) des Trägerelements (3), über den sich die Oberseiten-Haftschicht (13) erstreckt, mittig auf der Oberseite (7) liegt.

2. Doppelseitig klebendes Maskenband nach Anspruch 1,
**dadurch gekennzeichnet,**
**dass** sich die Oberseiten-Haftschicht (13) über wenigstens 20% der Breite des Trägerelements (3) erstreckt.

3. Doppelseitig klebendes Maskenband nach Anspruch 1 oder 2,
**dadurch gekennzeichnet,**
**dass** die Unterseiten-Haftschicht (11) eine Klebeschicht ist.

4. Doppelseitig klebendes Maskenband nach einem der Ansprüche 1 bis 3,
**dadurch gekennzeichnet,**
**dass** die Oberseiten-Haftschicht (13) eine Klebeschicht ist.

5. Doppelseitig klebendes Maskenband nach Anspruch 4,
**dadurch gekennzeichnet,**
**dass** die Oberseiten-Haftschicht (13) mit einem abziehbaren Schutzstreifen (15) abgedeckt ist.

6. Doppelseitig klebendes Maskenband nach Anspruch 5,
**dadurch gekennzeichnet,**
**dass** der Schutzstreifen (15) aus einem Material besteht, welches wenigstens einen Anteil Papier aufweist.

7. Doppelseitig klebendes Maskenband nach Anspruch 5 oder 6,
**dadurch gekennzeichnet,**
**dass** das Trägerelement (3) aufgerollt ist und der die Oberseiten-Haftschicht (13) abdeckende Schutzstreifen (15) auch die Unterseiten-Haftschicht (11) abdeckt.

8. Doppelseitiges Klebeband nach einem der vorstehenden Ansprüche,
**dadurch gekennzeichnet**, 6.
dass das Papier ausgewählt ist aus der Gruppe umfassend Japanpapier, Reispapier, Washi.

## Claims

1. A double-sided adhesive masking tape (1) with a strip-shaped support element (3) with two parallel continuous longitudinal edges (5) and a predetermined width (B), which comprises a lower side (9) and an upper side (7) lying opposite the lower side (9), wherein a lower-side bonding layer (11) is applied on the lower side and an upper-side bonding layer (13) is applied on the upper side (9), wherein the support element (3) is produced from a material which has a proportion of greater than 50 % by weight and up to 100 % by weight paper and is free from PVC plasticiser, wherein the support element (3) has a thickness of up to 1.0 mm, wherein the upper-side bonding layer (13) extends over a connected part of the width (B) and the lower-side bonding layer (11) extends over the entire width (B) of the support element,
**characterised in that**
the part of the width (B) of the support element (3), over which the upper-sided bonding layer (13) extends, lies centrally on the upper side (7).

2. The double-sided adhesive masking tape according to claim 1,
**characterised in that**
the upper-side bonding layer (13) extends over at least 20 % of the width of the support element (3).

3. The double-sided adhesive masking tape according to claim 1 or 2,
**characterised in that**
the lower-side bonding layer (11) is an adhesive layer.

4. The double-sided adhesive masking tape according to any one of claims 1 to 3,
**characterised in that**
the upper-side bonding layer (13) is an adhesive layer.

5. The double-sided adhesive masking tape according to claim 4,
**characterised in that**
the upper-side bonding layer (13) is covered by a peelable protective strip (15).

6. The double-sided adhesive masking tape according to claim 5,
**characterised in that**
the protective strip (15) is made from a material which comprises at least a proportion of paper.

7. The double-sided adhesive masking tape according to claim 5 or 6,
**characterised in that**
the support element (3) is rolled up and the protective strip (15) covering the upper-side bonding layer (13) also covers the lower-side bonding layer (11).

8. The double-sided adhesive tape according to any one of the preceding claims,
**characterised in that**
the paper is selected from the group comprising Japanese paper, rice paper or Washi.

## Revendications

1. Ruban de masquage double face (1) pourvu d'un élément de support (3) en forme de bande doté de deux arêtes longitudinales (5) continues parallèles d'une largeur (B) prédéfinie, qui comporte une face inférieure (9) et une face supérieure (7) opposée à la face inférieure (9), sur la face inférieure (9) étant appliquée une couche adhérente de face inférieure (11) et sur la face supérieure (9) étant appliquée une couche adhérente de face supérieure (13), l'élément de support (3) étant fabriqué en une matière qui comporte une part supérieure à 50 % en poids et de jusqu'à 100 % en poids de papier et étant exempt de plastifiants PVC, l'élément de support (3) ayant une épaisseur de jusqu'à 1,0 mm, la couche adhérente de face supérieure (13) s'étendant sur une partie cohérente de la largeur (B) et la couche adhérente de face inférieure (11) s'étendant sur toute la largeur (B) de l'élément de support (3)
**caractérisé en ce que**
la partie de la largeur (B) de l'élément de support (3), sur laquelle s'étend la couche adhérente de face supérieure (13) se situe au centre sur la face supérieure (7).

2. Ruban de masquage double face selon la revendication 1,
**caractérisé en ce que**
La couche adhérente de face supérieure (13) s'étend sur au moins 20 % de la largeur de l'élément de support (3).

3. Ruban de masquage double face selon la revendication 1 ou 2,
**caractérisé en ce que**
la couche adhérente de face inférieure (11) est une couche adhésive.

4. Ruban de masquage double face selon l'une quelconque des revendications 1 à 3,
**caractérisé en ce que**
la couche adhérente de face supérieure (13) est une couche adhésive.

5. Ruban de masquage double face selon la revendication 4,
**caractérisé en ce que**
la couche adhérente de face supérieure (13) est recouverte d'une bande protectrice (15) pelable.

6. Ruban de masquage double face selon la revendication 5,
**caractérisé en ce que**
la bande protectrice (15) est constituée d'une matière qui présente au moins une part de papier.

7. Ruban de masquage double face selon la revendication 5 ou 6,
**caractérisé en ce que**
l'élément de support (3) est enroulé et **en ce que** la bande protectrice (15) qui recouvre la couche adhérente de face supérieure (13) recouvre également la couche adhérente de face inférieure (11).

8. Ruban adhésif double face selon l'une quelconque des revendications précédentes,
**caractérisé en ce que**
le papier est choisi dans le groupe comprenant le papier japonais, le papier de riz, le washi.
